# FASCICULE DE BREVET EUROPEEN

(11) **EP 2 602 156 B1**
(45) Date de publication et mention de la délivrance du brevet: **26.02.2014**
(21) Numéro de dépôt: 12195670.0
(22) Date de dépôt: 05.12.2012
(51) Int. Cl.: B60R 11/02, H04M 1/60

(54) **Télécommande mixte filaire/sans-fil pour équipement multimedia et/ou de téléphonie "mains-libres" de véhicule automobile**
Mixed wireless/wired remote control for multimedia device and/or hands-free telephone of a motor vehicle
Gemischte Fernbedienung mit und ohne Draht für Multimediaausrüstung und/oder Freisprechtelefonanlage eines Kraftfahrzeugs

(30) Priorité: 08.12.2011 FR 1161310
(43) Date de publication de la demande: 12.06.2013
(73) Titulaire: Parrot, 75010 Paris (FR)
(72) Inventeur: Belkhoudja, Hocine, 75014 PARIS (FR); Morra, Flavien, 93500 PANTIN (FR); Vuillet, Jean-François, 78000 VERSAILLES (FR)
(74) Mandataire: Dupuis-Latour, Dominique

(56) Documents cités:
- EP-A1- 1 473 913
- DE-A1-102005 033 745
- US-A- 5 549 486
- US-A1- 2009 101 766
- US-B2- 7 456 777

## Description

L'invention concerne un ensemble pour la télécommande à distance d'un équipement multimédia et/ou de téléphonie "mains-libres", notamment un équipement incorporé à un véhicule automobile.

Cet équipement peut être placé sur la planche de bord, mais souvent à un endroit qui se révèle trop éloigné du conducteur pour que celui-ci puisse l'atteindre aisément sans gêner la conduite. C'est pour cette raison que l'équipement est complété par une télécommande destinée à faciliter l'accès aux commandes des fonctions de base de l'équipement. L'équipement peut également être placé dans un endroit normalement inaccessible au conducteur, par exemple dans la boîte à gants du véhicule.

Pour les équipements installés en "seconde monte" sur un véhicule, l'utilisation d'une télécommande sans fil, qui communique par ondes radiofréquence (RF) avec l'équipement se révèle particulièrement commode à mettre en oeuvre et à utiliser.

Cette télécommande sans fil peut être tenue à la main ou bien fixée sur un support collé sur la planche de bord, à portée de main du conducteur. Elle peut être également montée sur le volant du véhicule, comme le décrit par exemple le US 7 456 777 B2.

La télécommande n'a pas besoin de fil de liaison à l'équipement, et l'utilisateur peut placer très simplement le support de télécommande à l'endroit qu'il aura choisi, par exemple sur la planche de bord, au moyen d'un adhésif, sans avoir à réaliser de câblage avec passage de fils derrière la planche de bord ni autres contraintes techniques d'installation. La télécommande peut être également utilisée tenue à la main, notamment par un passager qui veut utiliser l'équipement.

Une utilisation sans fil, purement autonome, présente cependant l'inconvénient de devoir recourir à une pile d'alimentation, dont il faut ménager la durée de vie en raison de sa capacité réduite due à sa faible taille (pile "bouton"). De ce fait, il n'est pas possible de prévoir sur une télécommande sans fil un rétroéclairage permanent des touches, ce qui est un inconvénient la nuit, car il n'est pas possible de voir dans l'obscurité l'emplacement de la télécommande et de ses touches. Enfin, si la pile est épuisée, il devient impossible d'utiliser l'équipement tant que la pile n'aura pas été renouvelée, ce qui suppose d'avoir toujours à portée de main une pile de rechange si l'on souhaite pouvoir utiliser l'équipement en toutes circonstances.

Le but de l'invention est de résoudre ces problèmes en proposant un nouvel agencement de télécommande qui puisse fonctionner indifféremment en mode sans fil et en mode filaire, le choix du mode étant laissé à l'appréciation de l'utilisateur ou de l'installateur :
- en mode sans fil, l'alimentation de la télécommande sera assurée par une pile-bouton conventionnelle, la transmission des commandes étant opérée via une antenne RF. Dans ce cas, la télécommande permet une utilisation "nomade", c'est-à-dire où le boîtier de la télécommande n'est pas fixé sur la planche de bord ;
- en mode filaire, l'alimentation en énergie, et avantageusement la transmission des commandes également, sont assurées via une connexion filaire vers l'équipement. Dans ce mode, l'énergie provenant du réseau de bord du véhicule pourra alimenter non seulement les circuits de la télécommande, mais également le rétroéclairage des touches, permettant ainsi le pilotage de l'équipement en toutes circonstances, même la nuit.

L'idée de base de l'invention consiste à utiliser les mêmes contacts d'alimentation de batterie aussi bien pour recevoir une pile que pour se connecter à un support d'alimentation, de manière que la connectique soit minimale.

Essentiellement, l'ensemble de télécommande de l'invention comprend un boîtier de télécommande avec un logement de pile, susceptible de coopérer indifféremment soit avec un couvercle soit avec un support actif inséré dans le logement :
- le couvercle est destiné à une utilisation autonome de la télécommande, avec une pile d'alimentation (maintenue en place par le couvercle) et envoi de commandes par voie RF ;
- le support actif est destiné à une utilisation en mode filaire, sans pile d'alimentation, et comporte un bossage à insérer dans le logement, muni de bornes qui viennent en lieu et place de la pile coopérer avec les contacts d'alimentation du boîtier. Le support actif peut avantageusement être également pourvu de bornes pour la transmission des commandes par voie filaire, la transmission RF étant alors dans ce cas désactivée. Le support actif pourra également servir de support de la télécommande sur la planche de bord, conférant à l'ensemble un aspect avantageux sur le plan du style, sans en surcharger le design, et en conservant une ergonomie optimale.

Plus précisément, l'invention propose un ensemble comportant de manière en elle-même connue, comme divulgué par le US 7 456 777 B2 précité : un boîtier de télécommande comprenant une face apparente portant des touches et/ou boutons de commande, une face dorsale avec un logement de pile d'alimentation, et des moyens émetteurs radiofréquence, pour la transmission sans fil de signaux de commande vers l'équipement distant ; et un couvercle amovible, dissociable du boîtier, apte à obturer le logement et à maintenir en place une pile d'alimentation placée dans ce logement.

De façon caractéristique de l'invention, à l'intérieur du logement du boîtier de télécommande sont prévus un contact central d'alimentation et un contact périphérique d'alimentation aptes à venir en appui contre des pôles respectifs de la pile d'alimentation introduite dans le logement, ainsi que des contacts de transmission de signal, disposés au fond du logement, pour la transmission filaire de signaux de commande vers l'équipement distant.

L'ensemble comprend par ailleurs un support actif comportant : en face arrière, des moyens de fixation à la planche de bord du véhicule ; en face avant, des moyens de solidarisation à la face dorsale du boîtier, ainsi qu'un relief apte à pénétrer dans le logement du boîtier en lieu et place de la pile d'alimentation et en l'absence de couvercle amovible ; une ligne d'alimentation électrique, apte à être reliée au réseau de bord du véhicule ; une ligne de transmission de données, apte à être reliée à l'équipement distant ; deux bornes d'alimentation reliées à la ligne d'alimentation et disposées sur le relief en position centrale et en position périphérique, de manière à venir en appui contre les contacts respectivement central et périphérique du boîtier lorsque le relief est introduit et verrouillé dans le logement du boîtier ; et des bornes de transmission de signal, disposées sur le relief en des positions homologues des contacts de transmission du boîtier lorsque le relief est introduit et verrouillé dans le logement du boîtier.

Selon diverses caractéristiques subsidiaires avantageuses :
- les contacts de transmission de signal comprennent une paire de contacts diamétralement opposés en forme d'arcs de cercle, et dans lequel la transmission filaire des signaux de commande vers l'équipement distant est une transmission série asynchrone ;
- le boîtier de télécommande incorpore des moyens de détection d'une connexion établie sur les contacts de transmission de signal, et des moyens de désactivation des moyens émetteurs radiofréquence sur détection de ladite connexion ;
- le boîtier de télécommande incorpore des moyens de rétroéclairage des touches et/ou boutons de commande, des moyens de détection d'une connexion établie sur les contacts d'alimentation avec le réseau de bord du véhicule, et des moyens d'activation des moyens de rétroéclairage sur détection de ladite connexion ;
- les moyens de verrouillage du couvercle au boîtier sont des moyens à baïonnette, aptes à permettre la mise en place du couvercle sur le boîtier dans une position angulairement décalée puis le verrouillage par rotation d'une fraction de tour jusqu'à une position finale d'utilisation ;
- les moyens de solidarisation du support actif au boîtier sont des moyens à baïonnette, aptes à permettre la mise en place du boîtier sur le support actif dans une position angulairement décalée puis le verrouillage par rotation d'une fraction de tour jusqu'à une position finale d'utilisation ;
- l'ensemble comprend en outre un support passif, comportant en face arrière des moyens de fixation à la planche de bord du véhicule, et en face avant des moyens de solidarisation à la face dorsale du boîtier muni de la pile d'alimentation et du couvercle amovible ;
- lesdits moyens de solidarisation comprennent des crochets aptes à coopérer de manière réversible avec des évidements correspondants ménagées dans le couvercle amovible et/ou la face dorsale du boîtier Très avantageusement, les moyens de solidarisation du support passif, et ceux du support actif, à la face dorsale du boîtier, comprennent chacun des crochets respectifs aptes à coopérer avec les mêmes évidements du boîtier. Ces moyen sont en outre avantageusement configurés de manière à permettre la mise en place du boîtier sur la platine dans une position angulairement décalée puis le verrouillage par rotation d'une fraction de tour jusqu'à une position finale de maintien.

On va maintenant décrire un exemple de mise en oeuvre du dispositif de l'invention, en référence aux dessins annexés où les mêmes références numériques désignent d'une figure à l'autre des éléments identiques ou fonctionnellement semblables.
La Figure 1 est une vue perspective arrière éclatée montrant, dans une configuration sans fil, la télécommande de l'invention avec sa pile d'alimentation et le couvercle amovible.
Les Figures 2, 3 et 4 sont des vues sous divers angles montrant la manière d'associer la télécommande de la Figure 1 à un support passif de maintien sur le tableau de bord du véhicule.
La Figure 5 est une vue perspective arrière montrant la télécommande et un support actif permettant un fonctionnement en mode filaire.
La Figure 6 est une vue de face du support actif de la Figure 5, considéré isolément.
Les Figures 7 et 8 illustrent les éléments côté recto et côté verso du circuit imprimé interne du boîtier de télécommande, avec les divers contacts utilisés pour le fonctionnement en mode filaire.
La Figure 9 est une vue perspective montrant la manière de présenter la télécommande face au support actif, afin de coupler le boîtier de télécommande à ce support.
La Figure 10 représente, isolément et en vis-à-vis, les bornes d'alimentation et de transmission de signal du support actif, et les contacts d'alimentation et de transmission du signal du boîtier de télécommande.
Les Figures 11 et 12 montrent, sous forme superposée, les bornes et les contacts de la Figure 10, respectivement dans la position initiale de présentation de la télécommande face au support actif de la Figure 9, et dans la position finale, fonctionnelle, où le boîtier est verrouillé sur ce support.

Sur les figures, on a représenté l'ensemble de télécommande selon l'invention, qui comprend un boîtier de télécommande 100. Ce boîtier est destiné au pilotage d'un équipement multimédia et de téléphonie "mains-libres", grâce auquel le conducteur d'un véhicule automobile peut émettre ou recevoir un appel téléphonique sans quitter les mains du volant et, de la même façon, lancer ou arrêter la lecture d'une source musicale, augmenter ou diminuer le volume de reproduction, passer au morceau précédent ou suivant, etc.

Le boîtier 100 comprend un corps avec une face apparente 102 et une face dorsale 104. La face apparente porte divers boutons-poussoirs de télécommande 106, 108, 110 ..., ainsi qu'une molette rotative cliquable 112 pour des fonctions telles que le contrôle du volume, le défilement dans un menu, etc.

La face dorsale 104 présente une ouverture 114 formant logement et destinée à recevoir notamment une pile d'alimentation200, de type "bouton". Le logement de pile 114 laisse apparaître le circuit imprimé 116 de la télécommande, qui porte un contact central d'alimentation 118 et un contact périphérique d'alimentation 120 en forme de lames élastiques, destinés à venir en appui contre les pôles respectifs de la pile d'alimentation 200.

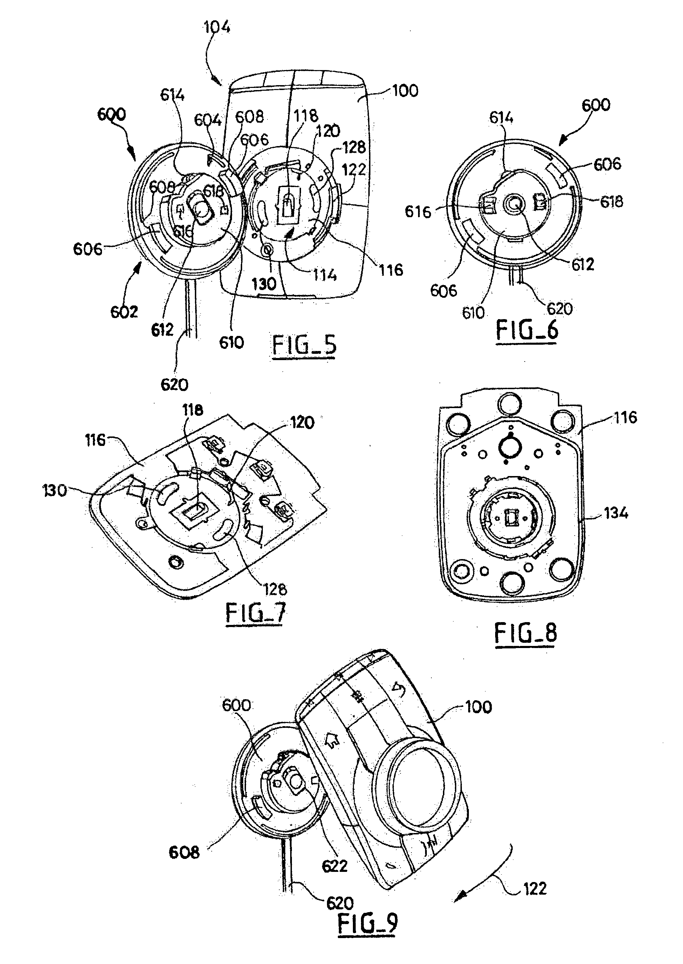

Ces contacts d'alimentation 118, 120 sont visibles de façon détaillée sur la Figure 7 qui représente, isolément, la face du circuit imprimé 116 visible au travers du logement de pile 114. Par ailleurs, sur la Figure 8 la référence 134 illustre l'antenne RF servant à la transmission sans fil de signaux vers l'équipement distant, cette antenne étant réalisée sous forme d'une piste conductrice au verso du circuit imprimé 116.

Pour le maintien en position de la pile 200 dans le logement 114, un couvercle amovible 300 vient obturer ce logement de pile. Le couvercle 300 comporte des moyens de verrouillage tels que des pattes 302 terminées par des ergots 304 venant coopérer avec des éléments homologues 122 du boîtier 100 formés à la périphérie du logement de pile 114, de manière à permettre la fermeture du logement et le blocage en position de la pile par un mouvement 306 d'une fraction de tour du couvercle.

La télécommande 100 ainsi équipée constitue un objet entièrement autonome permettant de piloter sans fil l'équipement distant.

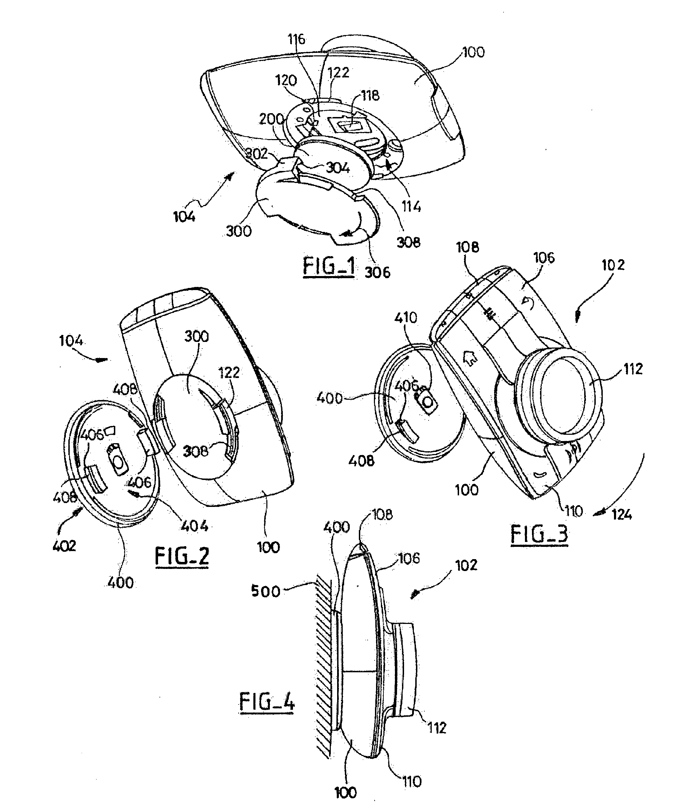

Avantageusement, il est prévu un support passif 400 pour maintenir en place la télécommande 100 sur la planche de bord 500 du véhicule (Figure 4).

Plus précisément, comme illustré sur les Figures 2 et 3, ce support passif 400 comprend une face dorsale 402 pourvue d'un disque adhésif pouvant être collé sur la planche de bord, et une face frontale 404 comportant des moyens de maintien à la face dorsale 104 du boîtier de télécommande obturée par le couvercle 300. Ces moyens de maintien sont par exemple constitués de saillies 406 terminées par des crochets de verrouillage 408 diamétralement opposés, venant s'introduire dans des ouvertures correspondantes de l'ensemble boîtier-couvercle, plus précisément une ouverture 122, plus large, du boîtier permettant l'introduction des crochets 408 et une ouverture 308, plus étroite, du couvercle 300 permettant le verrouillage sur le support passif 400 après rotation d'une fraction de tour (flèche 124, Figure 3). Un marquage 410 sur le support 400 montre à l'utilisateur l'inclinaison à donner au boîtier 100 pour que les crochets 408 puissent pénétrer convenablement dans les ouvertures 122 avant d'amorcer la rotation 124. Comme on peut le voir sur la Figure 4, après assemblage de la télécommande 100 sur le support passif 400, l'ensemble conserve une très faible épaisseur et les diverses touches de commande de la face apparente 102 de la télécommande restent parfaitement accessibles.

On va maintenant décrire la manière d'utiliser cette télécommande non plus en mode "sans fil" mais en mode filaire, en référence aux Figures 5 à 12.

Le mode filaire présente l'avantage de pouvoir fournir l'énergie à la télécommande directement depuis le réseau de bord du véhicule. La problématique d'autonomie de la pile-bouton disparaît, et il devient possible en outre de rétroéclairer les divers boutons de la face apparente de la télécommande, pour en améliorer la commodité d'utilisation notamment la nuit.

Ce mode d'utilisation met en oeuvre un support actif 600 qui se présente sous la forme d'un disque plat avec une face dorsale 602 portant un élément adhésif permettant de coller le disque sur la planche de bord 500, et une face avant 604 destinée à coopérer avec la face dorsale 104 du boîtier 100.

Plus précisément, la face avant 604 porte des saillies diamétralement opposées 606 terminées par exemple par des crochets 608 de verrouillage susceptibles de coopérer avec les encoches 122 du boîtier 100 après retrait du couvercle amovible et de la pile d'alimentation, c'est-à-dire dans une configuration où la cavité 114 du logement de pile est apparente. La face avant 604 du support actif 600 porte également un bossage ou relief 610 présentant sensiblement la forme et les dimensions d'une pile-bouton et destiné à pénétrer dans le logement de pile 114. Ce relief 610 porte une borne 612 susceptible de venir en appui contre le contact d'alimentation central 118 de la télécommande, et une borne périphérique 614 en forme de lame souple susceptible de venir en appui contre le contact d'alimentation périphérique 120 du boîtier 100.

Le support actif 600 porte également deux bornes diamétralement opposées 616, 618, de transmission de signal, destinées à coopérer avec des contacts homologues 128, 130, formés sur le circuit imprimé 116 du boîtier de télécommande 120, ces contacts étant apparents lorsque le logement de pile 114 est ouvert et la pile retirée. Les contacts 128, 130 peuvent notamment être des pistes conductrices réalisées sur le circuit imprimé 116 sur une fraction d'arc de cercle.

Le support actif 600 comporte en outre une ligne 620 d'alimentation électrique et de transmission de données, reliant les bornes d'alimentation 612, 614 et les bornes de transmission de signal 616, 618, à l'équipement distant. La transmission des commandes, qui ne nécessite pas un débit de données important, peut être une transmission série asynchrone de type UART, ne nécessitant que deux conducteurs.

Le support actif 600 est installé à poste fixe sur la planche de bord du véhicule et relié à l'équipement via la ligne 620 par l'installateur.

Le boîtier de télécommande 100 est monté sur le support actif 600 de la façon illustrée Figure 9, par un mouvement d'une fraction de tour du boîtier (flèche 132). Un marquage 622 sur le support 600 montre à l'utilisateur l'inclinaison à donner au boîtier 100 pour que les crochets 608 puissent pénétrer convenablement dans les ouvertures homologues du boîtier avant d'amorcer la rotation. Au final, après montage de la télécommande 100 sur le support actif 600, l'ensemble conserve une très faible épaisseur et les diverses touches de commande de la face apparente de la télécommande restent parfaitement accessibles.

Une fois la télécommande 100 mise en place et verrouillée sur le support actif 600, cette configuration peut être détectée automatiquement par le boîtier, qui désactive les fonctions de communication RF et active la transmission filaire des commandes vers l'équipement ainsi que le rétroéclairage des différentes touches de commande.

La caractéristique du support actif 600 est de permettre l'utilisation des mêmes contacts du boîtier (contact central 118 et contact périphérique 120) aussi bien :
- en mode sans fil, pour coopérer avec la pile lorsque celle-ci est placée dans le logement 114 et maintenue en place par le couvercle amovible 300 (configuration de la Figure 1), que
- en mode filaire lorsque, après retrait de la pile et du couvercle amovible, le boîtier 100 est verrouillé sur le support actif 600 (configuration des Figures 5 à 12).

On comprendra que, dans le mode filaire, le support actif 600 sert également de support mécanique de la télécommande sur la planche de bord.

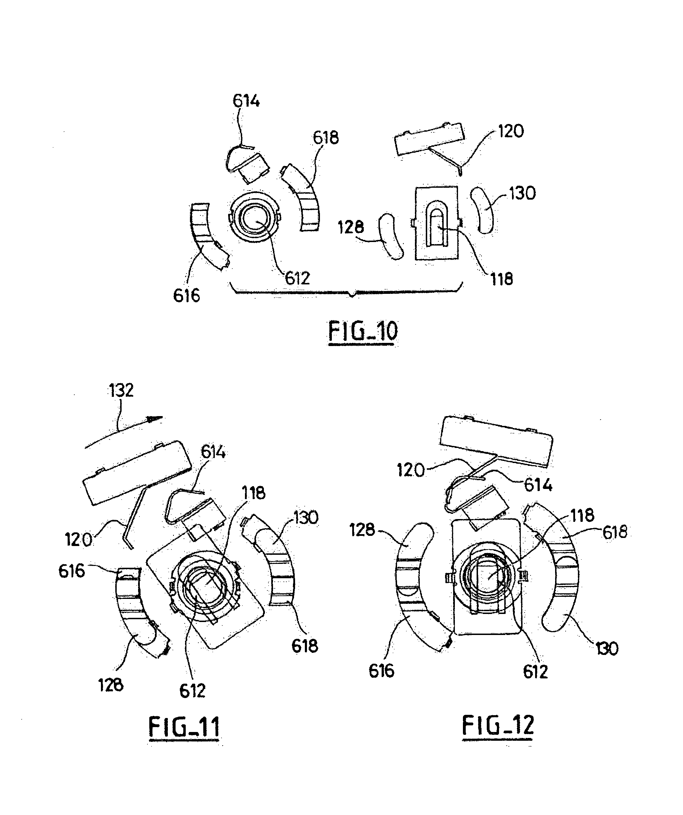

Les Figures 10 à 12 illustrent :
- La Figure 10, les bornes d'alimentation 612, 614 et de transmission de signal 616, 618 du support actif, et les contacts d'alimentation 118, 120 et de transmission du signal 128, 130 du boîtier de télécommande, ces différents éléments étant considérés isolément et en vis-à-vis ;
- Les Figures 11 et 12 montrent, sous forme superposée, les bornes 612, 614 et 616, 618 et les contacts 118, 120 et 128, 130 de la Figure 10, respectivement dans la position initiale de présentation de la télécommande face au support actif de la Figure 9, et dans la position finale, fonctionnelle, où le boîtier est verrouillé sur ce support.

Les bornes d'alimentation 612, 614 et de transmission de signal 616, 618 du support actif sont fixes, tandis que les contacts d'alimentation 118, 120 et de transmission de signal 128, 130 du boîtier de télécommande se déplacent lors de la rotation (flèche 132) correspondant à la mise en place mécanique du boîtier support 100 sur le support actif 600. La Figure 11 correspond à la configuration de la Figure 9 et la Figure 12 correspond à la configuration de ces mêmes éléments mais après rotation d'une fraction de tour, correspondant au verrouillage du boîtier sur le support actif : dans cette dernière position, le couplage est établi entre les contacts/bornes suivants : 118/612, 120/614 pour l'alimentation électrique, 128/616 et 130/618 pour la transmission filaire des commandes. Par ailleurs, comme on peut le constater, les contacts d'alimentation 118, 120 et de transmission du signal 128, 130 du boîtier, d'une part, et les bornes d'alimentation 612, 614 et de transmission de signal 616, 618 du support actif 600, d'autre part, sont géométriquement configurés de manière à éviter toute interférence entre eux lors du couplage du boîtier sur le support actif.

## Revendications

1. Un ensemble pour la commande à distance d'un équipement multimedia et/ou de téléphonie "mains-libres" incorporé à un véhicule automobile, cet ensemble comportant :
a) un boîtier de télécommande (100) comprenant :
- une face apparente (102) portant des touches et/ou boutons de commande (106-112) ;
- une face dorsale (104) avec un logement (114) de pile d'alimentation ; et
- des moyens émetteurs radiofréquence, pour la transmission sans fil de signaux de commande vers l'équipement distant, et
b) un couvercle amovible (300), dissociable du boîtier, apte à obturer le logement et à maintenir en place une pile d'alimentation (200) placée dans ce logement,
ensemble **caractérisé en ce qu'à** l'intérieur du logement (114) du boîtier de télécommande (100) sont prévus :
- un contact central d'alimentation (118) et un contact périphérique d'alimentation (120) aptes à venir en appui contre des pôles respectifs de la pile d'alimentation (200) introduite dans le logement ; et
- des contacts de transmission de signal (128, 130), disposés au fond du logement, pour la transmission filaire de signaux de commande vers l'équipement distant,
et **en ce qu'**il comprend en outre :
c) un support actif (600), comportant :
- en face arrière (602), des moyens de fixation à la planche de bord (500) du véhicule ;
- en face avant (604), des moyens (606, 608) de solidarisation à la face dorsale du boîtier, ainsi qu'un relief (610) apte à pénétrer dans le logement du boîtier en lieu et place de la pile d'alimentation et en l'absence de couvercle amovible ;
- une ligne (620) d'alimentation électrique, apte à être reliée au réseau de bord du véhicule ;
- une ligne (620) de transmission de données, apte à être reliée à l'équipement distant ;
- deux bornes d'alimentation (612, 614) reliées à la ligne d'alimentation et disposées sur le relief en position centrale et en position périphérique, de manière à venir en appui contre les contacts respectivement central et périphérique (118, 120) du boîtier lorsque le relief (610) est introduit et verrouillé dans le logement du boîtier ; et
- des bornes de transmission de signal (616, 618), disposées sur le relief en des positions homologues des contacts de transmission (128, 130) du boîtier lorsque le relief est introduit et verrouillé dans le logement du boîtier.

2. L'ensemble de la revendication 1, dans lequel les contacts de transmission de signal comprennent une paire de contacts diamétralement opposés en forme d'arcs de cercle (128, 130), et dans lequel la transmission filaire des signaux de commande vers l'équipement distant est une transmission série asynchrone.

3. L'ensemble de la revendication 1, dans lequel le boîtier de télécommande incorpore :
- des moyens de détection d'une connexion établie sur les contacts de transmission de signal (128, 130) ; et
- des moyens de désactivation des moyens émetteurs radiofréquence sur détection de ladite connexion.

4. L'ensemble de la revendication 1, dans lequel le boîtier de télécommande incorpore :
- des moyens de rétroéclairage des touches et/ou boutons de commande ;
- des moyens de détection d'une connexion établie sur les contacts d'alimentation avec le réseau de bord du véhicule ; et
- des moyens d'activation des moyens de rétroéclairage sur détection de ladite connexion.

5. L'ensemble de la revendication 1, dans lequel les moyens (302, 304) de verrouillage du couvercle au boîtier sont des moyens à baïonnette, aptes à permettre la mise en place du couvercle sur le boîtier dans une position angulairement décalée puis le verrouillage par rotation d'une fraction de tour (306) jusqu'à une position finale d'utilisation.

6. L'ensemble de la revendication 1, dans lequel les moyens (606, 608) de solidarisation du support actif au boîtier sont des moyens à baïonnette, aptes à permettre la mise en place du boîtier sur le support actif dans une position angulairement décalée puis le verrouillage par rotation d'une fraction de tour (132) jusqu'à une position finale d'utilisation.

7. L'ensemble de la revendication 1, comprenant en outre :
d) un support passif (400), comportant :
- en face arrière (402), des moyens de fixation à la planche de bord (500) du véhicule ; et
- en face avant (404), des moyens (406, 408) de solidarisation à la face dorsale du boîtier muni de la pile d'alimentation et du couvercle amovible.

8. L'ensemble de la revendication 7, dans lequel lesdits moyens de solidarisation comprennent des crochets (408) aptes à coopérer de manière réversible avec des évidements correspondants (122, 308) ménagées dans le couvercle amovible et/ou la face dorsale du boîtier.

9. L'ensemble de la revendication 8, dans lequel les moyens de solidarisation du support passif, et les moyens de solidarisation du support actif, à la face dorsale du boîtier, comprennent chacun des crochets respectifs (406, 408 ; 606, 608) aptes à coopérer avec les mêmes évidements (122) du boîtier.

10. L'ensemble de la revendication 8, dans lequel les crochets et les évidements correspondants sont configurés de manière à permettre la mise en place du boîtier sur la platine dans une position angulairement décalée puis le verrouillage par rotation d'une fraction de tour (124) jusqu'à une position finale de maintien.

## Patentansprüche

1. Einheit zur Fernsteuerung einer in ein Kraftfahrzeug eingebauten Multimedia- und/oder Freisprechtelefon-Ausrüstung, wobei diese Einheit aufweist:
a) ein Fernsteuerungsgehäuse (100), das enthält:
- eine sichtbare Seite (102), die Steuertasten und/oder -knöpfe (106-112) trägt;
- eine Rückseite (104) mit einer Aufnahme (114) für eine Versorgungsbatterie; und
- Radiofrequenz-Sendeeinrichtungen für die drahtlose Übertragung von Steuersignalen an die ferne Ausrüstung, und
b) einen vom Gehäuse trennbaren, entfernbaren Deckel (300), der die Aufnahme verdecken und eine in dieser Aufnahme angeordnete Versorgungsbatterie (200) an Ort und Stelle halten kann,
wobei die Einheit **dadurch gekennzeichnet ist, dass** innerhalb der Aufnahme (114) des Fernsteuerungsgehäuses (100) vorgesehen sind:
- ein zentraler Versorgungskontakt (118) und ein peripherer Versorgungskontakt (120), die gegen jeweilige Pole der in die Aufnahme eingeführten Versorgungsbatterie (200) in Auflage kommen können; und
- am Boden der Aufnahme angeordnete Signalübertragungskontakte (128, 130) für die drahtgebundene Übertragung von Steuersignalen an die ferne Ausrüstung,
und dass sie außerdem enthält:
c) einen aktiven Träger (600), der aufweist:
- an der Rückseite (602) Einrichtungen zur Befestigung am Armaturenbrett (500) des Fahrzeugs;
- an der Vorderseite (604) Einrichtungen (606, 608) zur festen Verbindung mit der Rückseite des Gehäuses sowie ein Relief (610), das in die Aufnahme des Gehäuses anstelle der Versorgungsbatterie und in Abwesenheit eines entfernbaren Deckels eindringen kann;
- eine Stromversorgungsleitung (620), die mit dem Bordnetz des Fahrzeugs verbunden werden kann;
- eine Datenübertragungsleitung (620), die mit der fernen Ausrüstung verbunden werden kann;
- zwei Versorgungsanschlüsse (612, 614), die mit der Versorgungsleitung verbunden und auf dem Relief in zentraler und peripherer Stellung angeordnet sind, um gegen den zentralen bzw. peripheren Kontakt (118, 120) des Gehäuses in Auflage zu kommen, wenn das Relief (610) in die Aufnahme des Gehäuses eingeführt und dort verriegelt wird; und
- Signalübertragungsanschlüsse (616, 618), die auf dem Relief in den Übertragungskontakten (128, 130) des Gehäuses entsprechenden Stellungen angeordnet sind, wenn das Relief in die Aufnahme des Gehäuses eingeführt und dort verriegelt wird.

2. Einheit nach Anspruch 1, wobei die Signalübertragungskontakte ein Paar von einander diametral entgegengesetzten Kontakten in Form von Kreisbögen (128, 130) enthalten, und wobei die drahtgebundene Übertragung der Steuersignale an die ferne Ausrüstung eine asynchrone serielle Übertragung ist.

3. Einheit nach Anspruch 1, wobei das Fernsteuerungsgehäuse aufnimmt:
- Einrichtungen zur Erfassung einer an den Signalübertragungskontakten (128, 130); aufgebauten Verbindung; und
- Einrichtungen zur Deaktivierung der Radiofrequenz-Sendeeinrichtungen bei Erfassung der Verbindung.

4. Einheit nach Anspruch 1, wobei das Fernsteuerungsgehäuse aufnimmt:
- Einrichtungen zur Hintergrundbeleuchtung der Steuertasten und/oder -knöpfe;
- Einrichtungen zur Erfassung einer an den Versorgungskontakten mit dem Bordnetz des Fahrzeugs aufgebauten Verbindung; und
- Einrichtungen zur Aktivierung der Einrichtungen zur Hintergrundbeleuchtung bei Erfassung der Verbindung.

5. Einheit nach Anspruch 1, wobei die Einrichtungen (302, 304) zur Verriegelung des Deckels am Gehäuse Bajonett-Einrichtungen sind, die das Einsetzen des Deckels auf dem Gehäuse in einer winkelversetzten Stellung und dann die Verriegelung durch eine Teilumdrehung (306) bis in eine Endnutzungsstellung erlauben können.

6. Einheit nach Anspruch 1, wobei die Einrichtungen (606, 608) zur festen Verbindung des aktiven Trägers mit dem Gehäuse Bajonett-Einrichtungen sind, die das Einsetzen des Gehäuses auf dem aktiven Träger in einer winkelversetzten Stellung und dann die Verriegelung durch eine Teilumdrehung (132) bis in eine Endnutzungsstellung erlauben können.

7. Einheit nach Anspruch 1, die außerdem enthält:
d) einen passiven Träger (400), der aufweist:
- an der Rückseite (402) Einrichtungen zur Befestigung am Armaturenbrett (500) des Fahrzeugs; und
- an der Vorderseite (404) Einrichtungen (406, 408) zur festen Verbindung mit der Rückseite des mit der Versorgungsbatterie und mit dem entfernbaren Deckel versehenen Gehäuses.

8. Einheit nach Anspruch 7, wobei die Einrichtungen zur festen Verbindung Haken (408) enthalten, die umkehrbar mit entsprechenden Aussparungen (122, 308) zusammenwirken können, die im entfernbaren Deckel und/oder der Rückseite des Gehäuses vorgesehen sind.

9. Einheit nach Anspruch 8, wobei die Einrichtungen zur festen Verbindung des passiven Trägers und die Einrichtungen zur festen Verbindung des aktiven Trägers mit der Rückseite des Gehäuses je Haken (406, 408; 606, 608) enthalten, die mit den gleichen Aussparungen (122) des Gehäuses zusammenwirken können.

10. Einheit nach Anspruch 8, wobei die Haken und die entsprechenden Aussparungen so konfiguriert sind, dass sie das Einsetzen des Gehäuses auf der Platine in einer winkelversetzten Stellung und dann die Verriegelung durch eine Teilumdrehung (124) bis in eine endgültige Haltestellung erlauben können.

## Claims

1. An assembly for the remote control of a "hands free" multimedia and/or phone system incorporated in a motor vehicle, the assembly including:
a) a remote-control casing (100) comprising:
- a visible face (102) bearing control keys and/or buttons (106-112);
- a back face (104) with a supply battery housing (114); and
- radiofrequency emitting means, for the wireless transmission of control signals toward the remote equipment, and
b) a removable lid (300), separable from the casing, adapted to close the housing and hold in place a supply battery (200) placed in this housing,
the assembly being **characterized in that**, inside the housing (114) of the remote-control casing (100), are provided:
- a central supply contact (118) and a peripheral supply contact (120), adapted to bear against respective poles of the supply battery (200) introduced into the housing; and
- signal transmission contacts (128, 130), arranged at the bottom of the housing, for the wire transmission of control signals toward the remote equipment,
and **in that** it further comprises:
c) an active support (600) including:
- on the back face (602), means for the fixation to the dashboard (500) of the vehicle;
- on the front face (604), means (606, 608) for the fastening to the back face of the casing, as well as a protrusion (610) adapted to enter into the housing of the casing in place of the supply battery and in the absence of removable lid;
- an electric supply line (620), adapted to be connected to the supply system on board of the vehicle;
- a data transmission line (620), adapted to be connected to the remote equipment;
- two supply terminals (612, 614) connected to the supply line and arranged on the protrusion in central position and peripheral position, so as to bear against the respectively central and peripheral contacts (118, 120) of the casing when the protrusion (610) is introduced and locked into the housing of the casing; and
- signal transmission terminals (616, 618), arranged on the protrusion in positions homologous to those of the transmission contacts (128, 130) of the casing when the protrusion is introduced and locked into the housing of the casing.

2. The assembly of claim 1, wherein the signal transmission contacts comprise a pair of diametrically opposed, arc of a circle shaped contacts (128, 130), and wherein the wire transmission of the control signals toward the remote equipment is an asynchronous serial transmission.

3. The assembly of claim 1, wherein the remote-control casing includes:
- means for detecting a connection established on the signal transmission contacts (128, 130); and
- means for deactivating the radiofrequency emitting means upon detection of said connection.

4. The assembly of claim 1, wherein the remote-control casing includes:
- means for backlighting the control keys and/or buttons;
- means for detecting a connection established on the supply contacts with the supply system on board the vehicle; and
- means for activating the backlighting means upon detection of said connection.

5. The assembly of claim 1, wherein the means (302, 304) for locking the lid to the casing are bayonet means, adapted to allow the positioning of the lid on the casing in an angularly offset position and the locking by a rotation over a fraction of a turn (306) to a final position of use.

6. The assembly of claim 1, wherein the means (606, 608) for fastening the active support to the casing are bayonet means, adapted to allow the positioning of the active support in an angularly offset position and the locking by a rotation over a fraction of a turn (132) to a final position of use.

7. The assembly of claim 1, further comprising:
d) a passive support (400), including:
- on the back face (402), means for the fixation to the dashboard (500) of the vehicle; and
- on the front face (404), means (406, 408) for the fastening to the back face of the casing provided with the supply battery and the removable lid.

8. The assembly of claim 7, wherein said fastening means comprise hooks (408) adapted to reversibly cooperate with corresponding recesses (122, 308) formed in the removable lid and/or the back face of the casing.

9. The assembly of claim 8, wherein the means for fastening the passive support, and the means for fastening the active support, to the back face of the casing, each comprise respective hooks (406, 408; 606, 608) adapted to cooperate with the same recesses (122) of the casing.

10. The assembly of claim 8, wherein the hooks and the corresponding recesses are configured in such a way to allow the positioning of the casing on the plate in an angularly offset position and the locking by a rotation over a fraction of a turn (124) to a final holding position.
